# EUROPÄISCHE PATENTSCHRIFT

(11) **EP 4 073 495 B1**
(45) Veröffentlichungstag und Bekanntmachung des Hinweises auf die Patenterteilung: **03.09.2025**
(21) Anmeldenummer: 20821029.4
(22) Anmeldetag: 14.12.2020
(51) Int. Cl.: G01N 21/84, G01N 21/17, G01N 21/88, G01N 25/72, G01N 21/95

(54) **VORRICHTUNG UND VERFAHREN ZUR BESTIMMUNG EINER MATERIALEIGENSCHAFT EINES PRÜFKÖRPERS IN EINEM OBERFLÄCHENNAHEN PRÜFKÖRPERBEREICH**
APPARATUS AND METHOD FOR DETERMINING A MATERIAL PROPERTY OF A TEST SPECIMEN IN A TEST SPECIMEN REGION NEAR THE SURFACE
APPAREIL ET PROCÉDÉ DE DÉTERMINATION D'UNE PROPRIÉTÉ DE MATÉRIAU D'UNE ÉPROUVETTE DANS UNE RÉGION D'ÉPROUVETTE PROCHE DE LA SURFACE

(30) Priorität: 12.12.2019 LU 101529
(43) Veröffentlichungstag der Anmeldung: 19.10.2022
(73) Patentinhaber: AIM Systems GmbH, 66386 St. Ingbert (DE)
(72) Erfinder: BÖTTGER, Stefan, 66386 St. Ingbert (DE)
(74) Vertreter: Zeiner, Johannes Michael
(86) Internationale Anmeldenummer: PCT/EP2020/085962
(87) Internationale Veröffentlichungsnummer: WO 2021/116489

(56) Entgegenhaltungen:
- EP-A1- 2 840 408
- EP-A1- 3 457 119
- WO-A1-2019/094813
- DE-A1- 102014 002 514
- DE-A1- 102015 205 400
- DE-U1- 202014 102 853
- US-A- 5 118 945
- US-A- 5 376 793
- US-A1- 2003 229 458
- US-A1- 2006 289 766
- US-A1- 2008 111 074
- US-A1- 2015 049 182
- US-A1- 2018 238 814
- US-A1- 2019 287 237
- US-A1- 2019 360 941
- ANONYMOUS: "Thermographic camera - Wikipedia", 26 March 2018 (2018-03-26), pages 1 - 9, XP093045959, Retrieved from the Internet <URL:https://web.archive.org/web/20180326212015/https://en.wikipedia.org/wiki/Thermographic_camera> [retrieved on 20230510]

## Beschreibung

Die Erfindung betrifft eine Vorrichtung sowie ein Verfahren zur photothermischen Bestimmung einer Materialeigenschaft eines Prüfkörpers in einem oberflächennahen Prüfkörperbereich, die mindestens eine elektromagnetische Strahlungsquelle zur Erwärmung zumindest eines Oberflächenbereichs des Prüfkörpers sowie eine Detektiereinrichtung zur Erfassung von von dem Oberflächenbereich emittierter Wärmestrahlung aufweist, wobei eine Auswerteinrichtung zur Ermittlung der zu bestimmenden Materialeigenschaft anhand der emittierten Wärmestrahlung vorgesehen ist.

Vorrichtungen und Verfahren zur Bestimmung einer Materialeigenschaft eines Prüfkörpers in einem oberflächennahen Prüfkörperbereich sind aus jeder der Druckschriften US 5,376,793 A, US 2019/360941 A1, US 5,118,945 A, EP 2 840 408 A1, EP 3 457 119 A1, US 2003/229458 A1, DE 10 2015 205 400 A1, US 2008/111074 A1, US 2019/287237 A1 und WO 2019/094813 A1, DE 10 2014 002 514 A1, US 2015/049182 A1, US 2018/238814 A1 und DE 20 2014 102853 U1 bekannt.

Aus dem Stand der Technik ist ein als Photothermie bezeichnetes Verfahren bekannt. Ein Oberflächenbereich eines mit einer Schicht belegten Substrats wird mit einem Laser bestrahlt, wodurch der Bereich erwärmt wird und insbesondere abhängig von einer Schichtdicke und einem Beschichtungsmaterial Wärmestrahlung emittiert wird, die mit einer Infrarotkamera erfasst wird. Die Emission der Wärmestrahlung erfolgt gegenüber der Bestrahlung mit einer Phasenverschiebung δ sowie einer Amplitude I_{D} zeitversetzt. Durch Ermittlung von δ, der emittierten Wärmestrahlung sowie anhand bekannter Kalibrierkurven kann eine Dicke der auf den Prüfkörper in dem bestrahlten Oberflächenbereich aufgebrachten Schicht bestimmt werden.

Ferner ist aus dem Stand der Technik ein Verfahren zur zerstörungsfreien Werkstoffprüfung bekannt, bei dem ein Prüfkörper mit Licht einer bestimmten Wellenlänge bestrahlt und von dem Prüfkörper reflektierte Strahlung von einem Detektor erfasst wird. Durch Abweichungen eines Reflexionsmusters von einem Referenzmuster kann beispielsweise ein Oberflächendefekt festgestellt werden.

Der vorliegenden Erfindung liegt die Aufgabe zugrunde, eine Vorrichtung sowie ein Verfahren der eingangs genannten Art weiterzuentwickeln, um eine spezifische Materialeigenschaft eines Prüfkörpers in dem oberflächennahen Prüfkörperbereich zu ermöglichen.

Erfindungsgemäß wird die Aufgabe durch die Vorrichtung nach Anspruch 1 und das Verfahren nach Anspruch 9 gelöst.

Gemäß der beanspruchten Erfindung ist eine Auswerteinrichtung vorgesehen, die dazu eingerichtet ist, einen Vergleich eines Referenzsignals mit einem Messsignal durchzuführen, so dass die Materialeigenschaft bestimmt werden kann. Vorteilhaft ist eine besonders zuverlässige und zerstörungsfreie Bestimmung der Materialeigenschaft möglich. Eine solche Vorrichtung ist beispielsweise zur Qualitätssicherung in der Automobilindustrie, vorzugsweise zur Prüfung einer Lackschichtdicke oder einer Qualität einer auf eine Karosserie aufgebrachten Lackschicht, eingerichtet.

Ein oberflächennaher Bereich ist ein Bereich, der sich in den Prüfkörper hinein erstreckt und durch den bestrahlten Oberflächenbereich begrenzt ist. Beispielsweise kann ein Prüfkörper ein beschichtetes Substrat oder ein aus Stahl gebildetes Bauteil sein, das durch Carburierung eine Randschicht mit einem im Vergleich zu einem Bauteilkern erhöhten Kohlenstoffgehalt aufweist. Der oberflächennahe Bereich wäre in diesen Fällen derjenige sich in den Prüfkörper hinein erstreckende Bereich, in dem die Materialeigenschaft von derjenigen des Bauteilkerns oder derjenigen des Substrats verschieden ist.

Die Strahlungsquelle ist zur Erzeugung von elektromagnetischer Strahlung in einem Wellenlängenbereich von 50 nm bis 50 µm vorgesehen, vorzugsweise zwischen 200 nm und 15 µm. Die Wellenlänge der von der Strahlungsquelle erzeugten Strahlung ist abhängig von dem Material, aus dem der Prüfkörper gebildet ist, sowie von dessen Absorptionsfähigkeit für Strahlung dieser Wellenlänge.

Mögliche Strahlungsquellen sind Leuchtdioden, vorzugsweise Licht einer Wellenlänge zwischen 780 nm und 2000 nm (Nahinfrarot) emittierende Leuchtdioden, Laser wie ein CO₂-Laser, ein Quantenkaskadenlaser, ein Nd-YAG-Laser, ein Heizstrahler oder ein handelsübliches Leuchtmittel.

Materialeigenschaften können technische, chemische, physikalische, magnetische, thermische oder thermophysikalische Eigenschaften sein. Eine technische Eigenschaft eines Materials kann beispielsweise eine Rauheit oder eine Rauheitsverteilung einer auf ein Substrat aufgebrachten Schicht sein.

Denkbar ist, dass die Materialeigenschaft eine Gefügeänderung in dem oberflächennahen Bereich ist, beispielsweise durch Carburierung, Nitrierung oder Carbo-Nitirierung eines Stahlwerkstoffs, oder eine durch Materialermüdung bewirkte Gefügeänderung.

Reflektierte Strahlung kann beispielsweise von dem oberflächennahen Prüfkörperbereich reflektierte Strahlung der Strahlungsquelle sein, oder solche einer weiteren Strahlungsquelle, die vorzugsweise als Laser ausgebildet sein kann, und mit der der oberflächennahe Prüfkörperbereich bestrahlt wird.

Denkbar ist, dass Umgebungslicht, das eine Umgebung, in der sich eine erfindungsgemäße Vorrichtung befindet, beleuchtet, reflektiert wird.

Zweckmäßigerweise ist die Strahlungsquelle zur Bestrahlung des mindestens einen Oberflächenbereichs derart ansteuerbar, dass deren Strahlung frequenz- und/oder intensitätsmodulierbar ist und vorzugsweise zur Erwärmung des mindestens einen Oberflächenbereichs eingerichtet ist. Bei einer Intensitätsmodulation wird die Intensität der Strahlungsquelle, mit der der oberflächennahe Prüfkörperbereich angeregt, das heißt bestrahlt, wird, periodisch verändert, beispielsweise sinusförmig oder rechteckig. Eine Anregungsfrequenz ist konstant. Beispielsweise würde der oberflächennahe Prüfkörperbereich bei einer Frequenz von 10 Hz 10 Mal pro Sekunde identisch angeregt.

Bei einer Frequenzmodulation wird eine intensitätsmodulierte Strahlungsquelle, mit der der oberflächennahe Prüfkörperbereich angeregt wird, zusätzlich in ihrer Anregungsfrequenz verändert, beispielsweise mit einer kontinuierlichen Änderung der Frequenz von 10 Hz bis 1000 Hz in einem Zeitraum von beispielsweise 10 Sekunden.

Denkbar ist, dass die Frequenzänderung in diskreten Schritten erfolgt.

Außerdem ist denkbar, dass die Strahlungsquelle mit einem Signal angesteuert wird, das durch Überlagerung mehrerer diskreter Modulationsfrequenzen gebildet ist, beispielsweise durch Überlagerung von Grund- und Oberwellen (Mehrfrequenzverfahren). Beim Mehrfrequenzverfahren erfolgt eine kontinuierliche Intensitätsmodulation mehrerer Frequenzen gleichzeitig.

Außerdem ist denkbar, dass der oberflächennahe Prüfkörperbereich impulsartig, beispielsweise mit einem Blitz, intensitätsmoduliert angeregt wird. Ein solcher Strahlungsimpuls wäre eine Überlagerung vieler Anregungsfrequenzen.

Eine Eindringtiefe einer durch Bestrahlung mit der elektromagnetischen Strahlungsquelle bewirkten Wärmewelle in den oberflächennahen Bereich hinein ist von der Bestrahlungsfrequenz, das heißt der Anregungsfrequenz, der Strahlungsquelle abhängig. Niedrige Bestrahlungsfrequenzen bewirken eine hohe Eindringtiefe, höhere Bestrahlungsfrequenzen eine geringere Eindringtiefe.

Durch die Frequenzmodulation ist beispielsweise eine Bestimmung von Eigenschaften einzelner Lagen einer mehrlagigen Schicht möglich, da jede einzelne Lage beispielsweise von einer bestimmten Frequenz angeregt werden kann und für jede einzelne Lage bzw. jede Frequenz ein ein auswertbares Messsignal erfasst werden kann.

Vorzugsweise entspricht eine Anzahl an Lagen einer Anzahl an diskreten Frequenzen, aus denen ein Anregungssignal, mit dem die Strahlungsquelle angesteuert wird, durch Überlagerung erzeugt wird.

In einer Ausgestaltung der Erfindung ist ein Mittel zur räumlichen und/oder zeitlichen Intensitätsmodulation von von der Strahlungsquelle erzeugter Strahlung vorgesehen, das vorzugsweise eine ansteuerbare Flüssigkristallanzeige und/oder ein diffraktives optisches Element aufweist. Ein diffraktives optisches Element (DOE) kann zur Einstellung einer Strahlgeometrie eines Lichtstrahls vorgesehen sein.

Das diffraktive optische Element (DOE) kann passiv oder aktiv ausgebildet sein. Ein passives diffraktives optisches Element kann als optisches Gitter mit konstantem Abstand benachbarter Spalte ausgebildet sein, ein aktives diffraktives optisches Element ist ansteuerbar und beispielsweise als räumlicher Modulator für Licht (Spatial Light Modulator - SLM) ausgebildet. Denkbar ist dessen elektronische Ansteuerung (EASLM) oder dessen optische Ansteuerung (OASLM).

Vorzugsweise weist das räumliche und/oder zeitliche Modulationsmittel eine Flüssigkristallanzeige (LCD) auf, die in den Strahlengang zwischen Strahlungsquelle und dem mindestens einen Oberflächenbereich eingebracht wird und durch deren pixelweise Ansteuerung eine einstellbares zeitlich und räumlich veränderbares Anregungsmuster auf den Oberflächenabschnitt projiziert werden kann. Ein zu untersuchender Bereich innerhalb des Oberflächenbereichs kann angeregt werden, beispielsweise um zur Auswertung eines Messsignals erforderliche Rechenleistung einzusparen. Durch eine Flüssigkristallanzeige ist eine intensitäts- und/oder frequenzmodulierte Anregung des oberflächennahen Prüfkörperbereichs denkbar. Außerdem ist denkbar, dass eine räumlich modulierte Anregung erfolgt. Kombinationen dieser drei Anregungsarten sind denkbar.

Für eine intensitäts- und/oder frequenzmodulierte Bestrahlung würde die Strahlungsdurchlässigkeit einzelner Bildpunkte der Flüssigkristallanzeige zeitlich verändert werden.

Für eine räumlich modulierte Bestrahlung würden einzelne Bereiche der Flüssigkristallanzeige strahlungsdurchlässig und andere Bereiche strahlungsundurchlässig geschaltet. Die Aufbringung bestimmter Messmuster auf den Prüfkörper ist denkbar.

Zweckmäßigerweise weist die Detektiereinrichtung ein matrixförmig angeordnetes Sensorfeld auf, das zur punktweisen Erfassung von von dem zumindest einen Oberflächenbereich emittierter Wärmestrahlung eingerichtet ist. Das Sensorfeld kann Bauteil einer Infrarot- (IR) oder Bolometerkamera sein. Ein jeder Bildpunkt der Kamera wird von einem Sensor gebildet und eine Auflösung der Kamera entspricht einer Anzahl vertikaler sowie horizontaler Sensoren. Dadurch, dass der mindestens eine Oberflächenbereich pixelweise erfasst wird, ist die Materialeigenschaft innerhalb des Oberflächenbereichs vorteilhaft besonders genau bestimmbar. Veränderungen der Materialeigenschaft innerhalb des Oberflächenbereichs sind außerdem erfassbar und können grafisch dargestellt werden, beispielsweise auf einem Anzeigebildschirm.

Beispielsweise ist die Detektiereinrichtung als Bolometerkamera ausgebildet. Vorteilhaft wird eine Vorrichtung geschaffen, die eine besonders kostengünstige Detektiereinrichtung aufweist, die insbesondere günstiger ist als eine IR-Kamera.

Denkbar ist eine Ausbildung als pyroelektrische Kamera, das heißt eine Kamera, deren einzelne Bildpunkte von pyroelektrischen Sensoren gebildet sind.

In einer weiteren Ausgestaltung der Erfindung ist jeder Sensor eines matrixförmig angeordneten Sensorfeldes der Detektiereinrichtung als bolometrischer Detektor, als Thermoelement oder als halbleiterbasierter Detektor ausgebildet. Eine Bolometerkamera ist vorteilhaft besonders kompakt ausgebildet und daher insbesondere für einen mobilen Einsatz einer erfindungsgemäßen Vorrichtung geeignet.

Erfindungsgemäß umfasst die Auswerteinrichtung ein Mittel zur Verstärkung eines von der Detektiereinrichtung erfassten Messsignals, vorzugsweise mindestens einen Lock-In-Verstärker. Ein Lock-In-Verstärker ist ein besonders schmalbandiger Bandpassfilter, durch den ein besonders gutes Signal-Rausch-Verhältnis möglich ist. Selbst schwache Messsignale können vorteilhaft erfasst und ausgewertet werden. Eine besonders genaue Bestimmung der Materialeigenschaft ist möglich.

Dazu wird erfindungsgemäß ein Referenzsignal mit einem Messsignal korreliert, beispielsweise durch eine Kreuzkorrelation, wodurch eine Phasenverschiebung δ sowie eine Amplitude I_{D} ermittelt werden können, anhand der die Materialeigenschaft durch Vergleich mit Referenzwerten oder -kurven bestimmt werden kann.

Das Referenzsignal kann ein intensitätsmoduliertes Anregungssignal sein, mit dem die Strahlungsquelle angesteuert wird, das Messsignal ein von der Detektiereinrichtung erfasstes Signal, beispielsweise ein von einer IR- oder Bolometerkamera erfasster, zeitlicher Wärmeverlauf in dem mindestens einen Oberflächenbereich.

Erfindungsgemäß werden eine Phasenverschiebung δ sowie eine Amplitude I_{D} durch eine Fouriertransformation oder einen sogenannten Goertzel-Algorithmus bestimmt.

In einer Ausgestaltung der Erfindung ist das Verstärkungsmittel dazu eingerichtet, das Messsignal eines jeden Sensors eines matrixförmigen Sensorfeldes der Detektiereinrichtung, die insbesondere als Bolometerkamera ausgebildet ist, zu verstärken. Vorteilhaft ist eine pixelweise, also bildpunktweise, Bestimmung von Materialeigenschaften innerhalb des mindestens einen Oberflächenbereichs möglich. Für jeden Bildpunkt wird von der Auswerteinrichtung eine Materialeigenschaft ermittelt und kann einem Benutzer der Vorrichtung beispielsweise auf einem Anzeigebildschirm grafisch angezeigt werden, wobei Abweichungen von einem Referenzwert insbesondere farblich dargestellt werden können. Graufstufen- und/oder Falschfarbendarstellungen sind denkbar.

In einer weiteren Ausgestaltung der Erfindung ist die Vorrichtung zur Bestimmung von thermophysikalischen Eigenschaften in dem oberflächennahen Bereich, einer Schichtdicke, einer Rauheit einer Schicht, insbesondere einer Lackschicht, von Dicken einzelner Lagen einer mehrlagigen Schicht, einer Härte des den Prüfkörper bildenden Materials in dem oberflächennahen Bereich, einer Härtungstiefe in dem oberflächennahen Bereich und/oder zur Bestimmung und Lokalisation von Defekten in dem oberflächennahen Bereich eingerichtet. Defekte können beispielsweise Korrosionsstellen sein oder Stellen, an denen Delamination von einzelnen Lagen einer Verbundwerkstoffs auftritt. Denkbar ist, dass Defekte als Einschlüsse oder unerwünschte Gefügeänderungen, beispielsweise aufgrund von Materialermüdung auftreten, ausgebildet sind.

Thermophysikalische Eigenschaften sind insbesondere eine Wärmeleitfähigkeit sowie eine Wärmekapazität des Prüfkörpers in dem oberflächennahen Prüfkörperbereich.

Zweckmäßigerweise ist bzw. sind die Strahlungsquelle, die Detektiereinrichtung und/oder die Auswerteinrichtung ortsfest angeordnet oder relativ zu dem Prüfkörper bewegbar. Vorteilhaft ist ein flexibler Einsatz der Vorrichtung möglich. Materialeigenschaften verschieden geformter Prüfkörper können mit einer einzigen Vorrichtung bestimmt werden. Beispielsweise kann die Strahlungsquelle an einer Roboterhand eines Industrieroboters angebracht sein und über eine Oberfläche eines Prüfkörpers geführt werden.

Außerdem ist denkbar, dass die Strahlungsquelle, die Detektiereinrichtung und/oder die Auswerteinrichtung austauschbar ausgebildet sind. Vorteilhaft ist ein modularer Aufbau möglich. Zur Erweiterung eines bestehenden Systems können einzelne Module hinzuerworben werden, ein Austausch der gesamten Vorrichtung für eine neue Verwendung ist nicht erforderlich.

Weiter vorteilhaft kann eine besonders große Oberfläche, beispielsweise eine lackierte Kraftfahrzeugkarosserie zur Bestimmung einer Lackschichtdicke in mehrere Oberflächenbereiche eingeteilt werden, die zu einer besonders hochaufgelösten Lackschichtdickenverteilung zusammengesetzt werden.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: eine Ausführungsform einer erfindungsgemäßen Vorrichtung,
- Fig. 2: eine weitere Ausführungsform einer erfindungsgemäßen Vorrichtung,
- Fig. 3: eine dritte Ausführungsform einer erfindungsgemäßen Vorrichtung,
- Fig. 4: eine Ausführungsform einer Vorrichtung zur Bestimmung einer Materialeigenschaft.

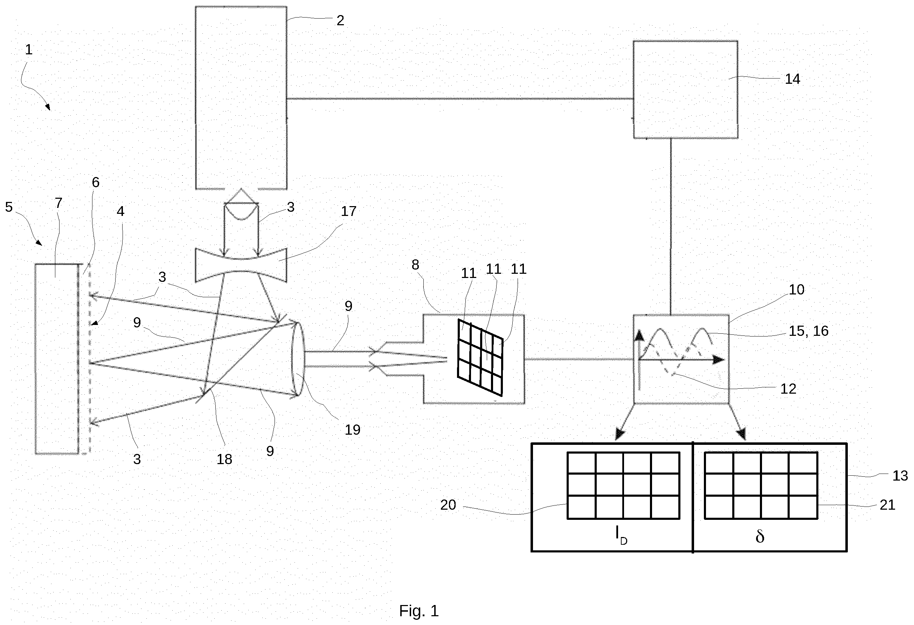

Eine in Fig. 1a schematisch gezeigte Vorrichtung (1) umfasst eine ansteuerbare, Leuchtdioden aufweisende Strahlungsquelle (2) zur Bestrahlung (3) eines Oberflächenbereichs (4) eines Prüfkörpers (5), der ein mit einer Schicht (6) belegtes Substrat (7) umfasst, eine Bolometerkamera (8) zur Erfassung von von dem Oberflächenbereich (4) emittierter Wärmestrahlung (9), einen mehrkanaligen Lock-in-Verstärker (10) zur Verstärkung eines von der Bolometerkamera (8) in einem jeden Bildpunkt (11) erfassten Messsignals (12) und eine Auswerteinrichtung (13), die zur Ermittlung einer Schichtdickenverteilung in dem Oberflächenbereich (4) sowie deren grafischer Darstellung eingerichtet ist.

Die Vorrichtung (1) umfasst außerdem eine Wechselspannungsquelle (14), die zur intensitätsmodulierten Ansteuerung (15) der Strahlungsquelle (2) und zur Versorgung des Lock-in-Verstärkers (10) mit einem Referenzsignal (16) vorgesehen ist. Das Referenzsignal (16) und das Ansteuersignal (15) sind identisch und in diesem Ausführungsbeispiel sinusförmig ausgebildet. Ferner ist das Referenzsignal für jeden Bildpunkt (11) der Bolometerkamera (8) gleich, da der Oberflächenbereich (3) gleichmäßig durch die Strahlungsquelle (2) bestrahlt wird.

Von der Strahlungsquelle (2) ausgehende, durch die Wechselspannungsquelle (14) intensitätsmoduliertes sichtbares Licht (3) tritt durch eine Linse (17) auf einen Strahlteiler (18) und wird in Richtung des Oberflächenbereichs (4) des Prüfkörpers (5) gelenkt, wodurch der Oberflächenbereich (4) erwärmt wird und Wärmestrahlung (9) emittiert. Die Wärmestrahlung tritt durch den Strahlteiler (18) sowie eine Linse (19) hindurch und wird von der Bolometerkamera (8), die in diesem Ausführungsbeispiel 1920x1080 matrixförmig angeordnete Bildpunkte (11) aufweist, erfasst. Jeder Bildpunkt ist als bolometrischer Detektor ausgebildet und mit einem Eingangskanal des mehrkanaligen Lock-in-Verstärkers (10) verbunden.

In jedem Bildpunkt (11) der Bolometerkamera (8) entsteht ein Messsignal (12), welches von dem mehrkanaligen Lock-in-Verstärker (10) mit dem Referenzsignal korreliert wird, um sowohl eine Amplitude I_{D} des Messsignals als auch dessen Phasenverschiebung δ gegenüber dem Referenzsignal für jeden Bildpunkt (11) zu ermitteln.

Gemäß der beanspruchten Erfindung wird in einer Variante eine Bestimmung einer Amplitude I_{D} sowie der Phasenverschiebung δ durch eine eine Fouriertransformation durchgeführt.

Die Auswerteinrichtung (13) gibt eine zweidimensionale Amplitudenverteilung I_{D} (x,y) (20) sowie eine räumliche Verteilung der Phasenverschiebung δ (x,y) (21) als Falschfarben- oder Graustufendarstellung auf einem in Fig. 1 nicht gezeigten Anzeigebildschirm aus.

Ist beispielsweise eine Dicke der Schicht (6) in dem Oberflächenbereich (3) homogen, ist eine Phasenverschiebung δ (x,y) für jeden Bildpunkt (11) gleich.

Obwohl in Fig. 1 nicht gezeigt, ist denkbar, dass eine Schichtdickenverteilung auf einem Anzeigebildschirm grafisch dargestellt wird. Zu deren Ermittlung sind in der Aufwerteinrichtung Referenzwerte für die Amplitude I_{D} des Messsignals und dessen Phasenverschiebung δ hinterlegt.

Ferner ist denkbar, dass eine intensitäts- und frequenzmodulierte Anregung, das heißt Bestrahlung, des Oberflächenbereichs (4) erfolgt.

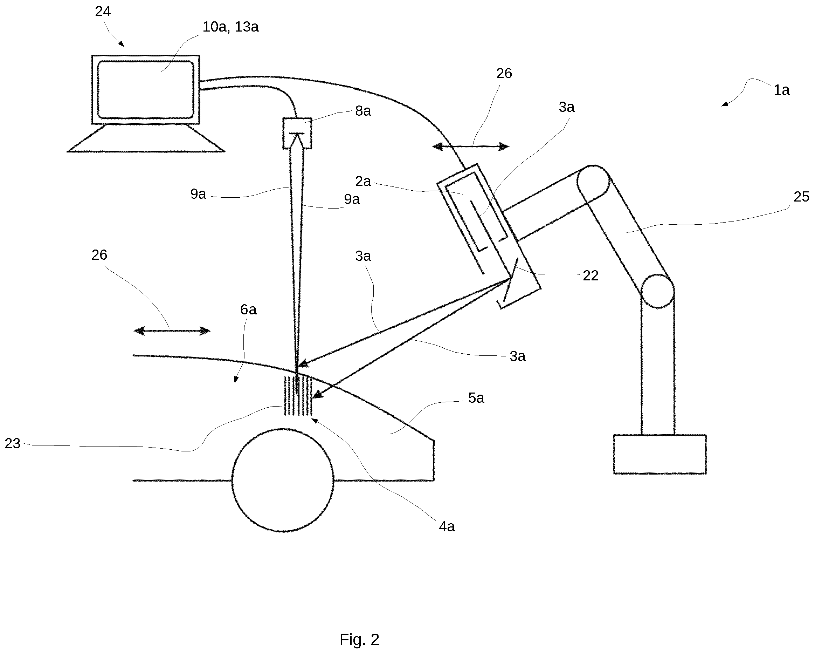

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Eine in Fig. 2 schematisch gezeigte Vorrichtung (1a) zur Bestimmung einer Lackschichtdickenverteilung an einer Kraftfahrzeugkarosserie (5a) unterscheidet sich von derjenigen in Fig. 1 gezeigten dadurch, dass eine ansteuerbare Strahlungsquelle (2a) Licht (3a) emittiert, das durch ein als räumlicher Modulator für Licht (Spatial Light Modulator - SLM) ausgebildetes diffraktives optisches Element (22) derart moduliert wird, dass ein Oberflächenbereich (4a) der Kraftfahrzeugkarosserie (5a) mit benachbarten, diskreten Linien (23) bestrahlt wird und emittierte Wärmestrahlung (9a) von einer ortsfest angeordneten Bolometerkamera (8a) erfasst wird. Ein Lock-in-Verstärker (10a) sowie eine Auswerteinrichtung (13a) sind Teil eines Computers (24) und in diesem Ausführungsbeispiel als Software ausgebildet.

Es versteht sich, dass ein für den Lock-in-Verstärker (10a) erforderliches Referenzsignal abhängig von der Ansteuerung des diffraktives optisches Elements (22) ist.

Die Strahlungsquelle (2a) und das diffraktive optische Element (22) sind an einem Industrieroboter (25) befestigt und in Richtung eines Doppelpfeils (26) bewegbar. Die Kraftfahrzeugkarosserie (5a) ist außerdem bewegbar, so dass die ortsfeste Bolometerkamera (8a) mehrere Oberflächenbereiche (4a) an verschiedenen Stellen der Karosserie (5a) erfassen kann.

Denkbar ist, dass eine frequenz-, intensitäts- oder räumlich modulierte Bestrahlung (3a) nicht durch Ansteuerung einer Strahlungsquelle (2a) erfolgt, sondern durch Ansteuerung der Flüssigkristallanzeige (LCD). Die Strahlungsquelle (2a) kann kontinuierlich strahlen. Vorteilhaft können träge Strahlungsquellen (2a) verwendet werden, deren Reaktionszeit länger ist als eine erforderliche Ansteuerzeit.

Ein für einen Lock-in-Verstärker (10a) erforderliches Referenzsignal wäre in diesem Fall ein Steuersignal, mit dem die Flüssigkristallanzeige angesteuert wird.

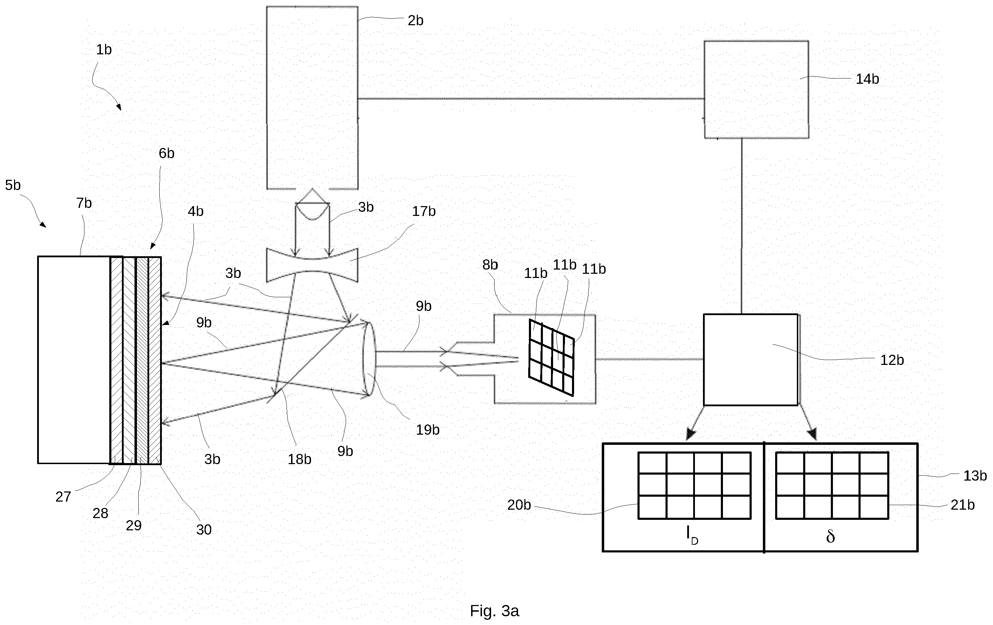

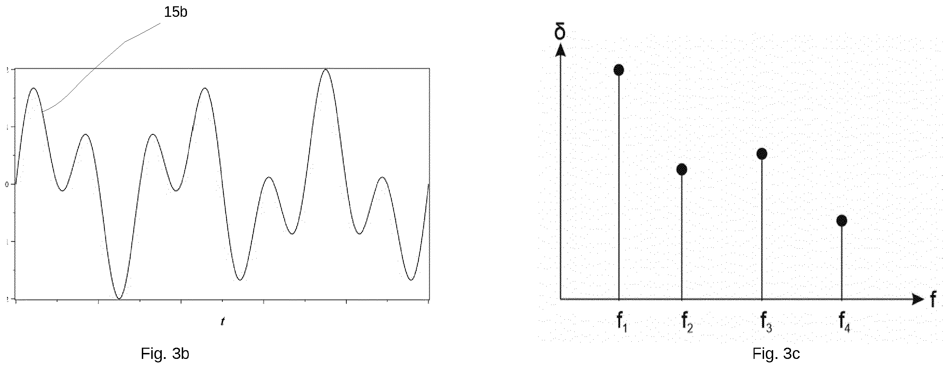

Es wird nun auf Fig. 3 Bezug genommen, wo gleiche oder gleichwirkende Teile mit derselben Bezugszahl wie in Fig. 1 und 2 bezeichnet sind und der betreffenden Bezugszahl jeweils der Buchstabe b beigefügt ist.

Eine in Fig. 3a schematisch gezeigte Vorrichtung (1b) ist zur Bestimmung einer Dicke einzelner Lagen (27-30) einer vierlagigen, auf ein Substrat (7b) aufgebrachten Schicht (6b) eingerichtet.

Eine Strahlungsquelle (2b) wird durch ein Mehrfrequenzverfahren angesteuert, bei dem ein in Fig. 3b beispielhaft gezeigtes Ansteuersignal (15b) aus Überlagerung von vier Frequenzen f₁ bis f₄ erzeugt wird, wobei f₁ < f₂ < f₃ < f₄ ist.

Durch eine in Fig. 3 nicht gezeigte Auswerteinrichtung kann eine in Fig. 3c gezeigte Phasenverschiebung δ als Funktion der Frequenz ermittelt werden. Durch Zuordnung einer Phasenverschiebung zu einer der Frequenzen f₁ bis f₄ ist für jede der Lagen (27-30) deren Dicke anhand von Referenzkurven ermittelbar.

Vorteilhaft ist mit der erfindungsgemäßen Vorrichtung sowie dem erfindungsgemäßen Verfahren eine Bestimmung von Dicken einzelner Lagen einer mehrlagigen Schicht mit nur einer Messung sowie einer einzigen Vorrichtung möglich.

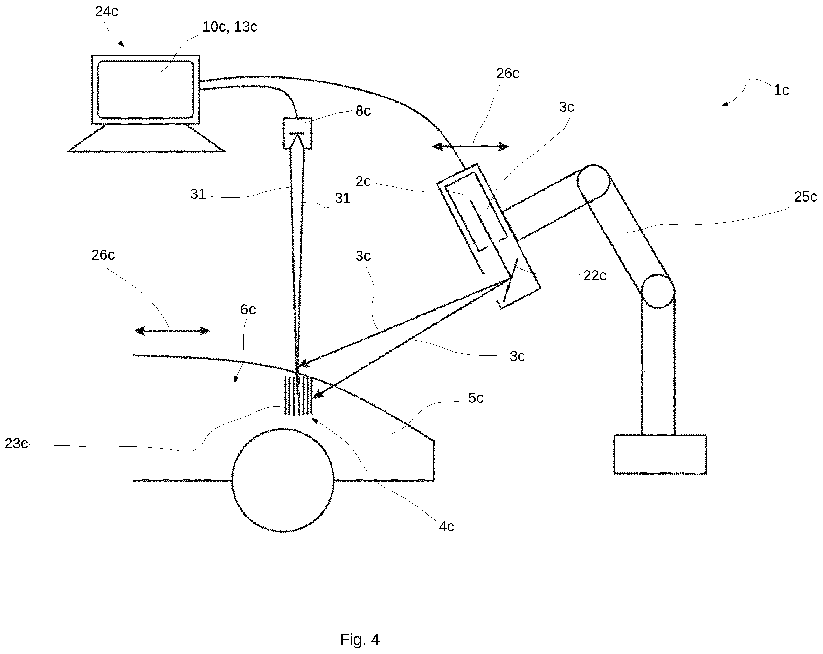

Es wird nun auf Fig. 4 Bezug genommen, wo gleiche oder gleichwirkende Teile mit derselben Bezugszahl wie in Fig. 1 bis 3 bezeichnet sind und der betreffenden Bezugszahl jeweils der Buchstabe b beigefügt ist.

Eine in Fig. 4 schematisch gezeigte Vorrichtung (1c) unterscheidet sich von derjenigen in Fig. 2 gezeigten dadurch, dass von einem Oberflächenbereich (4c) reflektierte Strahlung (31) zur Bestimmung von Lufteinschlüssen in einer Lackschicht (6c) einer lackierten Kraftfahrzeugkarosserie (5c) herangezogen wird.

Es versteht sich, dass sämtliche Kombinationen von Merkmalen der in Fig. 1 bis 3 gezeigten Ausführungsformen denkbar sind.

## Patentansprüche

1. Vorrichtung (1; 1a; 1b; 1c) zur photothermischen Bestimmung einer Materialeigenschaft eines Prüfkörpers (5; 5a; 5b; 5c) in einem oberflächennahen Prüfkörperbereich (6; 6a; 6b; 6c), die mindestens eine elektromagnetische Strahlungsquelle (2; 2a; 2b; 2c) zur Erwärmung zumindest eines Oberflächenbereichs (4; 4a; 4b; 4c) des Prüfkörpers sowie eine Detektiereinrichtung (8; 8a; 8b; 8c) zur Erfassung von von dem Oberflächenbereich emittierter Wärmestrahlung (9; 9a; 9b) aufweist, wobei eine Auswerteinrichtung (13; 13a; 13b; 13c) zur Ermittlung der zu bestimmenden Materialeigenschaft anhand der emittierten Wärmestrahlung (9; 9a; 9b) vorgesehen ist, und die Auswerteinrichtung (13; 13a; 13b; 13c) ein Mittel (10; 10a; 10b; 10c) zur Verstärkung eines von der Detektiereinrichtung (8; 8a; 8b; 8c) erfassten Messsignals (12) umfasst, wobei die Auswerteinrichtung dazu eingerichtet ist,
ein Referenzsignal (16) mit einem Messsignal (12) zu korrelieren und eine Phasenverschiebung δ sowie eine Amplitude I_{D} zu ermitteln, anhand der die Materialeigenschaft durch Vergleich mit Referenzwerten oder -kurven bestimmt wird,
wobei die Auswerteinrichtung zur Bestimmung der Phasenverschiebung δ sowie der Amplitude I_{D} durch eine Fouriertransformation oder einen Goertzel-Algorithmus eingerichtet ist.

2. Vorrichtung nach Anspruch 1,
**dadurch gekennzeichnet,**
**dass** die Strahlungsquelle (2; 2a; 2b; 2c) zur Erwärmung des mindestens einen Oberflächenbereichs (4; 4a; 4b; 4c) derart ansteuerbar ist, dass deren Strahlung (3; 3a; 3b; 3c) frequenz- und/oder intensitätsmodulierbar ist.

3. Vorrichtung nach Anspruch 1 oder 2,
**dadurch gekennzeichnet,**
**dass** ein Mittel (14; 22; 14b; 22c) zur räumlichen und/oder zeitlichen Intensitätsmodulation von von der Strahlungsquelle erzeugter Strahlung (3; 3a; 3b; 3c) vorgesehen ist, das vorzugsweise eine ansteuerbare Flüssigkristallanzeige und/oder ein diffraktives optisches Element (22) aufweist.

4. Vorrichtung nach einem der Ansprüche 1 bis 3,
**dadurch gekennzeichnet,**
**dass** die Detektiereinrichtung (8; 8a; 8b; 8c) ein matrixförmig angeordnetes Sensorfeld aufweist, das zur punktweisen Erfassung von von dem zumindest einen Oberflächenbereich (4; 4a; 4b; 4c) emittierter Wärmestrahlung (13; 13a; 13b) eingerichtet ist.

5. Vorrichtung nach einem der Ansprüche 1 bis 4,
**dadurch gekennzeichnet,**
**dass** jeder Sensor eines matrixförmig angeordneten Sensorfeldes der Detektiereinrichtung (8; 8a; 8b; 8c) als bolometrischer Detektor, als Thermoelement, als halbleiterbasierter Detektor oder als pyroelektrischer Sensor ausgebildet ist.

6. Vorrichtung nach Anspruch 1,
**dadurch gekennzeichnet,**
**dass** das Verstärkungsmittel (10; 10a; 10b, 10c) dazu eingerichtet ist, das Messsignal (12) eines jeden Sensors eines matrixförmigen Sensorfeldes der Detektiereinrichtung (8; 8a; 8b; 8c) zu verstärken.

7. Vorrichtung nach einem der Ansprüche 1 bis 6,
**dadurch gekennzeichnet,**
**dass** die Vorrichtung zur Bestimmung von thermophysikalischen Eigenschaften in dem oberflächennahen Bereich, einer Schichtdicke, einer Rauheit einer Schicht, insbesondere einer Lackschicht, von Dicken einzelner Lagen (27-30) einer mehrlagigen Schicht (6b), einer Härte des den Prüfkörper bildenden Materials in dem oberflächennahen Bereich, einer Härtungstiefe in dem oberflächennahen Bereich und/oder zur Bestimmung und Lokalisation von Defekten in dem oberflächennahen Bereich eingerichtet ist.

8. Vorrichtung nach einem der Ansprüche 1 bis 7,
**dadurch gekennzeichnet,**
**dass** die Strahlungsquelle (2; 2a, 2b; 2c), die Detektiereinrichtung (8; 8a; 8b; 8c) und/ oder die Auswerteinrichtung (13; 13a; 13b; 13c) ortsfest angeordnet oder relativ zu dem Prüfkörper (5; 5a; 5b; 5c) bewegbar ist bzw. sind.

9. Verfahren zur photothermischen Bestimmung von Materialeigenschaften eines Prüfkörpers (5; 5a; 5b) in einem oberflächennahen Bereich (6; 6a; 6b; 6c), bei dem zumindest ein Oberflächenbereich (4; 4a; 4b; 4c) des Prüfkörpers mit einer elektromagnetischen Strahlungsquelle (2, 2a; 2b; 2c) erwärmt wird und von dem zumindest einen Oberflächenbereich (4; 4a; 4b; 4c) emittierte Wärmestrahlung (13;13a; 13b) erfasst wird, wobei anhand der emittierten Wärmestrahlung (13; 13a; 13b) die zu bestimmende Materialeigenschaft in dem oberflächennahen Bereich durch eine Auswerteinrichtung (13; 13a; 13b) ermittelt wird, und durch die Auswerteinrichtung ein Referenzsignal (16) mit einem Messsignal (12) korreliert und eine Phasenverschiebung δ sowie eine Amplitude I_{D} ermittelt werden, anhand der die Materialeigenschaft durch Vergleich mit Referenzwerten oder -kurven bestimmt wird, wobei die Phasenverschiebung δ sowie die Amplitude I_{D} durch eine Fouriertransformation oder einen Goertzel-Algorithmus bestimmt werden.

10. Verfahren nach Anspruch 9,
**dadurch gekennzeichnet,**
**dass** der mindestens eine Oberflächenbereich (4; 4a; 4b; 4c) mit frequenz- und/oder intensitätsmodulierter Strahlung (3; 3a; 3b; 3c) erwärmt wird.

11. Verfahren nach Anspruch 9 oder 10,
**dadurch gekennzeichnet,**
**dass** der Prüfkörper (5; 5a; 5b; 5c), die Strahlungsquelle (2; 2a; 2b; 2c) und/oder die Detektiereinrichtung (8; 8a; 8b; 8c) bewegt wird bzw. werden oder relativ zueinander bewegt werden.

12. Verfahren nach einem der Ansprüche 9 bis 11,
**dadurch gekennzeichnet,**
**dass** eine Intensitäts- und/oder Phasenverteilung der von dem mindestens einen Oberflächenbereich (4; 4a; 4b; 4c) emittierten Wärmestrahlung (9; 9a; 9b) grafisch dargestellt wird.

13. Verfahren nach einem der Ansprüche 9 bis 12,
**dadurch gekennzeichnet,**
**dass** sich eine Frequenz, mit der der mindestens eine Oberflächenbereich durch die Strahlungsquelle erwärmt wird, zur Bestimmung von Eigenschaften einzelner Lagen (27-30) einer mehrlagigen Schicht (6b) zeitlich ändert oder eine Überlagerung mehrerer diskreter Frequenzen (f₁-f₄) ist.

## Claims

1. Apparatus (1; 1a; 1b; 1c) for photothermally determining a material property of a test specimen (5; 5a; 5b; 5c) in a test specimen region (6; 6a; 6b; 6c) near the surface, which comprises at least one electromagnetic radiation source (2; 2a; 2b; 2c) for heating at least one surface region (4; 4a; 4b; 4c) of the test specimen and a detection device (8; 8a; 8b; 8c) for detecting thermal radiation (9; 9a; 9b) emitted by the surface region, wherein an evaluation device (13; 13a; 13b; 13c) is provided for determining the material property to be determined on the basis of the emitted thermal radiation (9; 9a; 9b), and the evaluation device (13; 13a; 13b; 13c) comprises a means (10; 10a; 10b; 10c) for amplifying a measurement signal detected by the detection device (8; 8a; 8b; 8c), wherein the evaluation device is configured to correlate a reference signal (16) with a measurement signal (12) and to determine a phase shift δ and an amplitude I_{D}, on the basis of which the material property is determined by comparison with reference values or reference curves, wherein the evaluation device is configured to determine the phase shift δ and the amplitude I_{D} by a Fourier transformation or a Goertzel algorithm.

2. Apparatus according to claim 1,
**characterized in that**
the radiation source (2; 2a; 2b; 2c) for heating the at least one surface region (4; 4a; 4b; 4c) can be controlled in such a way that its radiation (3; 3a; 3b; 3c) may be modulated in frequency and/or intensity.

3. Apparatus according to claim 1 or 2,
**characterized in that**
a means (14; 22; 14b; 22c) for spatial and/or temporal intensity modulation of radiation (3; 3a; 3b; 3c) generated by the radiation source is provided, which means preferably has a controllable liquid crystal display and/or a diffractive optical element (22).

4. Apparatus according to any one of claims 1 to 3,
**characterized in that**
the detection device (8; 8a; 8b; 8c) has a matrix-shaped sensor field which is configured for a point-by-point detection of thermal radiation (13; 13a; 13b) emitted by the at least one surface region (4; 4a; 4b; 4c).

5. Apparatus according to any one of claims 1 to 4,
**characterized in that**
each sensor of a matrix-shaped sensor array of the detection device (8; 8a; 8b; 8c) is designed as a bolometric detector, as a thermocouple, as a semiconductor-based detector or as a pyroelectric sensor.

6. Apparatus according to claim 1,
**characterized in that**
the amplifying means (10; 10a; 10b, 10c) is configured to amplify the measurement signal (12) of each sensor of a matrix-shaped sensor array of the detection device (8; 8a; 8b; 8c).

7. Apparatus according to any one of claims 1 to 6,
**characterized in that**
the apparatus is configured for determining thermophysical properties in the region near the surface, a layer thickness, a roughness of a layer, in particular a varnish layer, thicknesses of single layers (27- 30) of a multilayered coating (6b), a hardness of the material forming the test specimen in the region near the surface, a hardening depth in the region near the surface and/or for determining and localizing defects in the region near the surface.

8. Apparatus according to any one of claims 1 to 7,
**characterized in that**
the radiation source (2; 2a, 2b; 2c), the detection device (8; 8a; 8b; 8c) and/or the evaluation device (13; 13a; 13b; 13c) is or are arranged in a stationary manner or are movable relative to the test specimen (5; 5a; 5b; 5c).

9. Method for photothermally determining material properties of a test specimen (5; 5a; 5b) in a region (6; 6a; 6b; 6c) near the surface, in which at least one surface region (4; 4a; 4b; 4c) of the test specimen is heated with an electromagnetic radiation source (2, 2a; 2b; 2c) and thermal radiation (13; 13a; 13b) emitted by the at least one surface region (4; 4a; 4b; 4c) is detected, wherein the material property to be determined is determined by an evaluation device (13; 13a; 13b) on the basis of the emitted thermal radiation (13; 13a; 13b), and a reference signal (16) is correlated with a measurement signal (12) by the evaluation device and a phase shift δ and an amplitude I_{D} are determined, on the basis of which the material property is determined by comparison with reference values or reference curves, wherein the phase shift δ and the amplitude I_{D} are determined by a Fourier transformation or a Goertzel algorithm.

10. Method according to claim 9,
**characterized in that**
the at least one surface region (4; 4a; 4b; 4c) is heated with frequency- and/or intensity-modulated radiation (3; 3a; 3b; 3c).

11. Method according to claim 9 or 10,
**characterized in that**
the test specimen (5; 5a; 5b; 5c), the radiation source (2; 2a; 2b; 2c) and/or the detection device (8; 8a; 8b; 8c) is or are moved or are moved relative to one another.

12. Method according to one of claims 9 to 11,
**characterized in that**
an intensity and/or phase distribution of the thermal radiation (9; 9a; 9b) emitted by the at least one surface region (4; 4a; 4b; 4c) is graphically displayed.

13. Method according to one of claims 9 to 12,
**characterized in that**
a frequency at which the at least one surface region is heated by the radiation source changes over time or is a superposition of a plurality of discrete frequencies (f₁-f₄) for determining properties of single layers (27-30) of a multilayered coating (6b).

## Revendications

1. Appareil (1 ; 1a ; 1b ; 1c) de détermination photothermique d'une propriété de matériau d'une éprouvette (5 ; 5a ; 5b ; 5c) dans une région d'éprouvette (6 ; 6a ; 6b ; 6c) proche de la surface, qui comprend au moins une source de rayonnement électromagnétique (2 ; 2a ; 2b ; 2c) pour chauffer au moins une zone superficielle (4 ; 4a ; 4b ; 4c) de l'éprouvette et un dispositif de détection (8 ; 8a ; 8b ; 8c) pour détecter le rayonnement thermique (9 ; 9a ; 9b) émis par la zone superficielle, dans lequel un dispositif d'évaluation (13 ; 13a ; 13b ; 13c) est conçu pour déterminer la propriété du matériau à déterminer sur la base du rayonnement thermique émis (9 ; 9a ; 9b), et le dispositif d'évaluation (13 ; 13a ; 13b ; 13c) comprend un moyen (10 ; 10a ; 10b ; 10c) pour amplifier un signal de mesure détecté par le dispositif de détection (8 ; 8a ; 8b ; 8c), dans lequel le dispositif d'évaluation est configuré pour corréler un signal de référence (16) avec un signal de mesure (12) et pour déterminer un déphasage δ et une amplitude I_{D}, sur la base desquels la propriété du matériau est déterminée par comparaison avec des valeurs de référence ou des courbes de référence, dans lequel le dispositif d'évaluation est configuré pour déterminer le déphasage δ et l'amplitude I_{D} par une transformation de Fourier ou un algorithme de Goertzel.

2. Appareil selon la revendication 1,
**caractérisé en ce que**
la source de rayonnement (2 ; 2a ; 2b ; 2c) pour chauffer la au moins une zone superficielle (4 ; 4a ; 4b ; 4c) peut être commandée de manière à ce que son rayonnement (3 ; 3a ; 3b ; 3c) puisse être modulé en fréquence et/ou en intensité.

3. Appareil selon la revendication 1 ou 2,
**caractérisé en ce que**
un moyen (14 ; 22 ; 14b ; 22c) de modulation spatiale et/ou temporelle de l'intensité du rayonnement (3 ; 3a ; 3b ; 3c) généré par la source de rayonnement est fourni, lequel moyen comporte de préférence un écran à cristaux liquides contrôlable et/ou un élément optique diffractif (22).

4. Appareil selon l'une des revendications 1 à 3,
**caractérisé en ce que**
**en ce que** le dispositif de détection (8 ; 8a ; 8b ; 8c) comporte un champ de capteurs en forme de matrice qui est configuré pour la détection point par point du rayonnement thermique (13 ; 13a ; 13b) émis par la au moins une zone superficielle (4 ; 4a ; 4b ; 4c).

5. Appareil selon l'une des revendications 1 à 4,
**caractérisé en ce que**
chaque capteur d'un réseau matriciel de capteurs du dispositif de détection (8 ; 8a ; 8b ; 8c) est conçu comme un détecteur bolométrique, comme un thermocouple, comme un détecteur à base de semi-conducteurs ou comme un capteur pyroélectrique.

6. Appareil selon la revendication 1,
**caractérisé en ce que**
le moyen d'amplification (10 ; 10a ; 10b, 10c) est configuré pour amplifier le signal de mesure (12) de chaque capteur d'un réseau matriciel de capteurs du dispositif de détection (8 ; 8a ; 8b ; 8c).

7. Appareil selon l'une des revendications 1 à 6,
**caractérisé en ce que**
l'appareil est configuré pour déterminer les propriétés thermophysiques dans la région proche de la surface, une épaisseur de couche, une rugosité d'une couche, en particulier d'une couche de vernis, des épaisseurs de couches individuelles (27- 30) d'une couche multicouche (6b), une dureté du matériau formant l'éprouvette dans la région proche de la surface, une profondeur de durcissement dans la région proche de la surface et/ou pour déterminer et localiser des défauts dans la région proche de la surface.

8. Appareil selon l'une des revendications 1 à 7,
**caractérisé en ce que**
la source de rayonnement (2 ; 2a, 2b ; 2c), le dispositif de détection (8 ; 8a ; 8b ; 8c) et/ou le dispositif d'évaluation (13 ; 13a ; 13b ; 13c) est ou sont disposés de manière stationnaire ou sont mobiles par rapport à l'éprouvette (5 ; 5a ; 5b ; 5c).

9. Procédé de détermination photothermique de propriétés de matériaux d'une éprouvette (5 ; 5a ; 5b) dans une zone proche de la surface (6 ; 6a ; 6b ; 6c), dans lequel au moins une zone de surface (4 ; 4a ; 4b ; 4c) de l'éprouvette est chauffée par une source de rayonnement électromagnétique (2, 2a ; 2b ; 2c) et le rayonnement thermique (13 ; 13a ; 13b) émis par la au moins une zone de surface (4 ; 4a ; 4b ; 4c) est détecté, dans lequel, à l'aide du rayonnement thermique émis (13 ; 13a ; 13b), la propriété du matériau à déterminer dans la zone proche de la surface est déterminée par un dispositif d'évaluation (13 ; 13a ; 13b), et par le dispositif d'évaluation, un signal de référence (16) est corrélé avec un signal de mesure (12), et un déphasage δ ainsi qu'une amplitude I_{D} sont déterminés, à l'aide desquels la propriété du matériau est déterminée par comparaison avec des valeurs de référence ou des courbes de référence, le déphasage δ ainsi que l'amplitude I_{D} étant déterminés par une transformation de Fourier ou un algorithme de Goertzel.

10. Procédé selon la revendication 9,
**caractérisé en ce que**
ladite au moins une zone de surface (4 ; 4a ; 4b ; 4c) est chauffée par rayonnement modulé en fréquence et/ou en intensité (3 ; 3a ; 3b ; 3c).

11. Procédé selon la revendication 9 ou 10,
**caractérisé en ce que**
l'éprouvette (5 ; 5a ; 5b ; 5c), la source de rayonnement (2 ; 2a ; 2b ; 2c) et/ou le dispositif de détection (8 ; 8a ; 8b ; 8c) sont déplacés ou sont déplacés les uns par rapport aux autres.

12. Procédé selon l'une quelconque des revendications 9 à 11,
**caractérisé en ce**
**qu'**une distribution d'intensité et/ou de phase du rayonnement thermique (9 ; 9a ; 9b) émis par ladite au moins une zone de surface (4 ; 4a ; 4b ; 4c) est représente graphiquement.

13. Procédé selon l'une quelconque des revendications 9 à 12,
**caractérisé en ce**
**qu'**une fréquence à laquelle la au moins une zone de surface est chauffée par la source de rayonnement varie dans le temps pour déterminer des propriétés de couches individuelles (27-30) d'une couche multicouche (6b) ou est une superposition de plusieurs fréquences discrètes (f₁-f₄).
